**Europäisches Patentamt**

**European Patent Office**

**Office européen des brevets**

(19)

(11) Veröffentlichungsnummer : **0 173 146**
**B1**

(12) **EUROPÄISCHE PATENTSCHRIFT**

(45) Veröffentlichungstag der Patentschrift :
**02.03.88**

(21) Anmeldenummer : **85110022.2**

(22) Anmeldetag : **09.08.85**

(51) Int. Cl.⁴ : **C 08 L 69/00, C 08 L 35/06, C 08 L 51/04, C 08 L 25/14**

(54) Acrylnitrilfreie polycarbonat blends.

(30) Priorität : **21.08.84 DE 3430688**

(43) Veröffentlichungstag der Anmeldung :
**05.03.86 Patentblatt 86/10**

(45) Bekanntmachung des Hinweises auf die Patenterteilung : **02.03.88 Patentblatt 88/09**

(84) Benannte Vertragsstaaten :
**DE FR GB IT NL**

(56) Entgegenhaltungen :
**EP-A- 0 135 492**

(73) Patentinhaber : **BAYER AG**
**Konzernverwaltung RP Patentabteilung**
**D-5090 Leverkusen 1 Bayerwerk (DE)**

(72) Erfinder : **Wingler, Frank, Dr.**
**Walter-Flex-Strasse 17**
**D-5090 Leverkusen (DE)**
Erfinder : **Koch, Otto, Dr.**
**Morgengraben 12**
**D-5000 Koeln 80 (DE)**
Erfinder : **Lindner, Christian, Dr.**
**Riehler Strasse 200**
**D-5000 Koeln 60 (DE)**
Erfinder : **Reinking, Klaus, Dr.**
**Robert-Stolz-Strasse 16B**
**D-5632 Wermelskirchen 1 (DE)**

EP 0 173 146 B1

**Beschreibung**

Die Erfindung betrifft nitrilgruppenfreie thermoplastische Formmassen aus statistisch aufgebauten, N-Phenyloder Methyl-maleinimid enthaltenden Vinylaromat-Copolymerisaten, aromatischen Polycarbonat-Harzen und aus einem mit Methylmethacrylat gepfropften Elastomer.

Polymermischungen auf Basis von Styrol-Maleinsäure-anhydrid-Acrylnitril-Copolymerisaten, Polycarbonat-Harzen und Acrylnitril-Gruppen enthaltenden Kautschuk-Pfropfpolymerisaten sind DE-OS 26 53 146 und DE-OS 26 53 143 beschrieben.

Weiter lehrt DE-OS 31 30 774 Mischungen, die Styrol-Maleinsäureanhydrid-bzw. Styrol-Maleinsäure-anhydrid-Acrylnitril-Harze, Polycarbonat-Harze und Pfropfprodukte von Styrol bzw. Styrol und Acrylnitril auf einen Kautschuk enthalten.

Es hat sich jedoch gezeigt, daß sich solche Acrylnitril enthaltenden Polymermischungen beim Verarbeiten leicht verfärben und insbesondere in Kombination mit Maleinsäureanhydrid-Copolymerisaten zur Vernetzung neigen. Außerdem sind Pfropfprodukte, die vorwiegend Styrol oder auch Acrylnitril enthalten, mit der Maleinsäureanhydrid- oder maleinimid-Harzkomponente nicht verträglich, so daß Delaminierungen bei mechanischer Beanspruchung auftreten. Es wurde daher auch versucht, Kautschuke mit Anhydrid-Polymeren zu bepfropfen und diese Pfropfprodukte mit einem Polycarbonat-Harz, mit weiteren Anhydrid-Copolymeren eines monovinyliden aromatischen Monomeren und mit einem α, ßethylenisch ungesättigtem Anhydrid sowie mit einem verträglichen Polymeren eines Monomeren, anders als des Anhydrids, zu mischen (US-PS 4.218.544). Weitere kautschukmodifizierte Styrol-Maleinsäureanhydrid-Copolymerisate, hergestellt durch Polymerisation von Styrol und Maleinsäureanhydrid in Gegenwart eines Kautschuks, in Mischung mit einem Polycarbonat-Harz als Hauptkomponente sind in der EP-A 63 634 und US-PS 4.351.920 aufgeführt. Auch bei solchen Mischungen treten Delaminierungen auf. Zum anderen gelingt der statistische Einbau von Maleinsäureanhydrid in Pfropfprodukte aufgrund der Neigung zur alternierenden 1:1-Copolymerisation mit Vinylaromaten nur unter Einhaltung besonderer Zulauf- und Nachdosierrezepturen, deren Reproduzierbarkeit zu wünschen übrig läßt, siehe hierzu auch die US-PS3.919.854.

Gegenstand der Erfindung sind acrylnitrilfreie thermoplastische Formmassen aus

A) 20-78 Gew.-Tln. (bezogen auf Formmasse) eines statistischen Copolymerisats von

a1) 12 bis 92 Gew.-Tln. (bezogen auf Copolymerisat) Styrol, p-Methylstyrol oder Mischungen davon,

a2) 8 bis 30 Gew.-Tle. (bezogen auf Copolymerisat) eines Gemischs aus 100 bis 10 Gew.-% N-Phenyl- oder N-Methyl-maleinimid und 0 bis 90 Gew.-% Maleinsäureanhydrid,

a3) 0 bis 80 Gew.-Tle. (bezogen auf Copolymerisat) Methylmethacrylat,

B) 12-60 Gew.-Tle. (bezogen auf Formmasse) eines thermoplastischen Dihydroxydiarylalkan-polycarbonats und

C) 10-40 Gew.-Tle. (bezogen auf Formmasse) eines Pfropfpolymerisats von 20 bis 80 Gew.-Tln. Methylmethacrylat auf 80 bis 20 Gew.-Tle. eines Kautschuks mit einer Glasübergangstemperatur unter —20 °C.

Die Harze (A) sind statistisch aufgebaut. Solche statistisch aufgebaute Copolymerisate können bevorzugt durch eine kontinuierliche Masse- oder Lösungspolymerisation bei unvollständigen Umsätzen aus den entsprechenden Monomeren hergestellt werden.

Bevorzugte Copolymerisate A sind aufgebaut aus 70 bis 92 Gew.-Teilen Styrol, 8 bis 30 Gew.-Teilen N-Phenyloder N-Cyclohexyl-maleinimid ; 70 bis 92 Gew.-Teilen Styrol 6 bis 28 Gew.-Teilen N-Phenyl- oder N-Cyclohexyl-maleinimid und 2 bis 24 Gew.-Teilen Maleinsäureanhydrid ; 12 bis 87 Gew.-Teilen Styrol, 8 bis 30 Gew.-Teilen N-Phenyl- oder N-Cyclohexylmaleinimid, 5 bis 80 Gew.-Teilen Methylmethacrylat ; 12 bis 87 Gew.-Teilen Styrol, 6 bis 28 Gew.-Teilen N-Phenyl- oder N-Cyclohexyl-maleinimid, 2 bis 24 Gew.-Teilen Maleinsäureanhydrid und 5 bis 60 Gew.-Teilen Methylmethacrylat.

Anstelle von Styrol können die Polymere auch p-Methylstyrol enthalten.

(B) Zur Herstellung der Polymerblends können aromatische Dihydroxydiarylalkan-Polycarbonate verwendet werden, denen z.B.

Dihydroxydiphenyle,
Bis(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfoxide,

Bis-(hydroxyphenyl)-sulfone,
α,α'-Bis-(hydroxyphenyl)-diisopropylbenzole,

zugrunde liegen, sowie deren kernalkylierte und kernhalogenierte Verbindungen. Diese und weitere geeignete Diphenole sind z.B. in den US-Patentschriften 3 028 365 ; 2 999 835 ; 3 148 172 ; 3 275 601 ; 2 991 273 ; 3 271 367 ; 3 062 781 und 2 999 846, in den deutschen Offenlegungsschriften 1 570 703 ; 2 063 050 ; 2 063 052 ; 2 211 956 ; 2 211 957, der französischen Patentschrift 1 561 518 und der Monographie « H. Schnell, Chemistry and Physics of Polycarbonates, Intersciense Publishers, New York, 1964° beschrieben. Bevorzugte Diphenole sind z.B. :

4,4'-Dihydroxydiphenyl,
2,2-Bis-(4-hydroxyphenyl)-propan,
2,4-Bis-(4-hydroxyphenyl)-2-methylbutan,
1,1-Bis-(4-hydroxyphenyl)-cyclohexan,
α, α -Bis-(4-hydroxyphenyl)-p-diisopropylbenzol,
2,2-Bis-(3-methyl-4-hydroxyphenyl)-propan,
2,2-Bis-(3-chlor-4-hydroxyphenyl)-propan,
Bis-(3,5-dimethyl-4-hydroxyphenyl)-methan,
2,2-Bis-(3,5-dimethyl-4-hydroxyphenyl)-propan,
Bis-(3,5-dimethyl-4-hydroxyphenyl)-sulfon,
2,4-Bis-(3,5-dimethyl-4-hydroxyphenyl)-2-methylbutan,
1,1-Bis-(3,5-dimethyl-4-hydroxyphenyl)-cyclohexan,
α, α'-Bis-(3,5-dimethyl-4-hydroxyphenyl)-p-diisopropylbenzol,
2,2-Bis-(3,5-dichlor-4-hydroxyphenyl)-propan,
2,2-Bis-(3,5-dibrom-4-hydroxyphenyl)-propan.
Besonders bevorzugte Diphenole sind z.B. :
2,2-Bis-(4-hydroxyphenyl)-propan,
2,2-Bis-(3,5-dimethyl-4-hydroxyphenyl)-propan,
2,2-Bis-(3,5-dichlor-4-hydroxyphenyl)-propan,
2,2-Bis-(3,5-dibrom-4-hydroxyphenyl)-propan,
1,1-Bis-(4-hydroxyphenyl)-cyclohexan.
Bevorzugte aromatische Polycarbonate sind solche, denen eines oder mehrere der als bevorzugt genannten Diphenole zugrundeliegen. Besonders bevorzugt werden Copolycarbonate, denen 2,2-Bis-(4-hydroxyphenyl)-propan und eines der anderen als besonders bevorzugt genannten Diphenole zugrundeliegen. Besonders bevorzugt sind weiterhin Polycarbonate allein auf Basis von 2,2-Bis-(4-hydroxyphenyl)-propan oder 2,2-Bis-(3,5-dimethyl-4-hydroxyphenyl)-propan.

Die aromatischen Polycarbonate können nach bekannten Verfahren hergestellt werden, z.B. einer Schmelzumesterung aus Bisphenol und Diphenylcarbonat und in Lösung aus Bis-phenolen und Phosgen. Die Lösung kann homogen sein (« Pyridinverfahren ») oder heterogen (« Zweiphasen-Grenzflächenverfahren »). Erfindungsgemäß sind Polycarbonate, die in Lösung, insbesondere nach dem Zweiphasen-Grenzflächenverfahren hergestellt worden sind, besonders geeignet.

Die aromatischen Polycarbonate können durch den Einbau geringer Mengen, vorzugsweise swischen 0,05 und 2,0 Mol-% bezogen auf eingesetzte Diphenole, an drei- oder mehr als dreifunktionellen Verbindungen, z.B. solchen mit drei oder mehr als drei phenolischen Hydroxygruppen verzweigt sein.

Polycarbonate dieser Art sind z.B. in den DE-OS 1 570 533 ; 1 595 762 ; 2 116 974 ; 2 113 347 ; 2 500 092 ; der GB-PS 1 079 821, der US-PS 3 544 514 beschrieben.

Einige der verwendbaren Verbindungen mit drei oder mehr als drei phenolischen Hydroxygruppen sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-cyclohexyl-propan, 2,4 Bis-(4-hydroxyphenylisopropyl)-phenol, 2,6 Bis-(2'-hydroxy-5' -methylbenzyl)-4-methylphenol, 2-(4-hydroxyphenyl)-2-(2,4-dihydroxyphenyl)-propan und 1,4-Bis-(4,4''-di-hydroxytriphenyl-methyl)-benzol. Einige der sonstigen dreifunktionellen Verbindungen sind 2,4-Dihydroxybenzoesäure, Trimesinsäure, Cyanurchlorid und 3,3-Bis-(4-hydroxyphenyl)-2-oxo-2,3-dihydroindol.

Die aromatischen Polycarbonate sollen in der Regel mittlere Gewichtsmittel-Molekulargewichte $\overline{M}_w$ von 10 000 bis über 200 000, vorzugsweise von 20 000 bis 80 000 haben (ermittelt durch Messungen der rel. Viskosität in $CH_2 Cl_2$ bei 25° C bei einer Konzentration von 0,5 Gew.-%).

Im Falle von Polycarbonatmischungen können den hochmolekularen Polycarbonaten $\overline{M}_w$ von 10 000 bis 200.000 auch kleine Anteile niedermolekularer Polycarbonate, z.B. mit einem mittleren Polymerisationsgrad von 2-20, zugemischt sein.

Die Pfropfpolymerisate (C) bestehen aus 80 bis 20 Gew.- Teilen eines Kautschuks und 20 bis 80 Gew.-Teilen in dessen Gegenwart polymerisierten Methylmethacrylat.

Diese Pfropfpolymerisate sind bekannt und können hergestellt werden, indem man in Gegenwart eines Kautschuks das Methylmethacrylat nach bekannten Polymerisationsverfahren, z.B. in Substanz, in Lösung, in Emulsion, Dispersion, Suspension oder in kombinierten Verfahren wie z.B. Lösungs-Suspensionspolymerisationen pfropfpolymerisiert. Bei der Polymerisation des Methylmethacrylates bildet sich neben Pfropfpolymeren des Vinylmonomeren auf der Kautschukkomponente auch ungepfropftes Polymethylmethacrylat ; die Menge dieser ungepfropften Anteile kann durch das jeweilige Pfropfpolymerisationsverfahren und die Polymerisationsbedingungen in weiten Bereichen variiert werden. Als Maß für die Menge des pfropfpolymerisierten Methylmethacrylats wird normalerweise der Pfropfgrad benutzt. Pfropfpolymerisate (C) im Sinne der Erfindung sind die Polymerisate, die durch Polymerisation des Vinylmonomeren in Gegenwart des Kautschuks gebildet werden - unabhängig vom Pfropfgrad.

Die zur Pfropfpolymerisation eingesetzten Kautschuke können unvernetzt, teilvernetzt oder hochvernetzt vorliegen. Arbeitet man z.B. mit Lösungspfropfpolymerisation, so geht man von unvernetzten Kautschuken aus ; arbeitet man mit Emulsionspfropfung, so können praktisch alle Kautschuke, ob vernetzt oder unvernetzt, Verwendung finden, solange sie auch als Emulsion vorliegen. Die Pfropfpolymerisate (C) selbst enthalten aber auf jeden Fall wenigstens partiell vernetzte Kautschuke, bevorzugt Kautschuke mit einem Vernetzungsgrad von wenigstens 50 Gew.-%. Das bedeutet, daß auch dann, wenn zur Herstellung der Pfropfpolymerisate (C) von unvernetzten Kautschuken ausgegangen wird, während der eigentlichen Pfropfpolymerisation von Methylmethacrylat auf Kautschuk wenigstens eine partielle Nachvernetzung der Kautschanteile stattfinden muß.

Unter den erfindungsgemaßen geeigneten Pfropfpolymerisate (C) sind also damit wenigstens teilvernetzte Polymerisate zu verstehen, normalerweise besitzen die Pfropfpolymerisate wenigstens einen Gelgehalt (also unlöslichen Anteil als Maß für den Vernetzungsgrad) von wenigstens 15 Gew.-%, vorzugsweise wenigstens 50 Gew.-%, insbesondere wenigstens 60 Gew.-%, gemessen bei 23°C in organischen Lösungsmitteln.

Die Pfropfpolymerisation des Methylmethacrylates, gegebenenfalls in Mischung mit kleinen Mengen Comonomer, wird vorzugsweise radikalisch oder thermisch initiiert.

Als Pfropfgrundlage (C1) werden Natur- und Synthesekautschuke in löslicher oder unvernetzter Form verwendet. Geeignete Synthesekautschuke sind Homo- und Copolymerisate von gegebenenfalls Halogen substituierten, konjugierten Dienen mit 4 bis 8 Kohlenstoffatomen wie Butadien, Isopren, Chloropren und deren Copolymerisate mit Styrol. Die Copolymerisate können statistisch oder blockartig aufgebaut sein. Bei blockartigen Produkten kann es sich um Zweiblockpolymere der Form AB oder auch um Dreiblockpolymere der Form ABA, sowie um sternförmige Blockpolymere etwa der Formel $(ABA)_xY$ handeln, wobei A z.B. für Styrol, B für Butadien und Y für ein mehrfunktionelles Kupplungsreagenz, wie z.B. $SiCL_4$, $S_2Cl_2$, Divinylbenzol, epoxidierte Fettsäuren u.a. steht ; x liegt in der Größenordnung von 2 bis 5. Bei Verwendung von löslichem Kautschuk werden bevorzugt Polybutadiene mit einem hohen cis-Anteil an Doppelbindungen in der Polymerkette von über 55 %, wobei der Anteil an 1,2-Vinyl-Doppelbindungen bis 15 %, bezogen auf alle Doppelbindungen, betragen kann, sowie lineare sowie sternförmige Styrol-Butadien-Blockpolymere mit einem Styrolanteil von 5 bis 45 Gew.-%, eingesetzt.

Eine weitere Klasse der Synthesekautschuke besteht aus Ethylen-Propylen-co- und Terpolymeren. Sie enthalten 70 bis 30 Gew.-Teile Ethylen auf 30 bis 70 Gew.-Teile Propylen. Vorteilhaft sind Terpolymere mit 4 bis 15 Gew.-% z.B. 5-Ethylidennorbornen, Dicyclopentadien, Hexadien-1,4, 2,2,1-Bicycloheptadien mit etwa 1 bis 20 C=C-Doppelbindungen pro 1000 Atome. Pfropfkomponente auf Basis dieser sogenannten EPDM- oder APTK-Kautschuke zeichnen sich durch besonders gute Witterungsbeständigkeit aus. Zu den witterungsbedständigen Pfropfkomponenten gehören ebenfalls die Klasse der Polyethylen-covinylacetate (EVA) und der Acrylat-Elastomere. Die EVA-Elastomere enthalten 30 bis 85 % einpolymerisiertes Vinylacetat, können zur besseren Bepfropfbarkeit mit ungesättigten Carbonsäuren, z.B. Acryl- oder Methacrylsäure seitenständig verestert sein. Die EVA-Copolymere können auch teilverseift sein mit OH-Zahlen von 1 bis etwa 100 mg KOH/g Substanz. Bei den Acrylatkautschuken handelt es sich meist um Copolymerisate von $C_2$-$C_8$-Alkylester der Acrylsäure, wie z.B. Ethyl-, n- oder iso-Propyl-, n-Butyl-, iso-Butyl-, tert.-Butyl-, 2-Ethylhexyl-acrylat. Weitere Comonomere sind u.a. Methacrylate mit 1 bis 14 C-Atomen im Esterteil, Butadien, Vinylalkylether mit 1 bis 18 C-Atomen im Ether-Teil. Diese Acrylatkautschuke enthalten gegebenenfalls kleine Mengen polyfunktioneller Vinyl- oder Alkylmonomerer zur Vernetzung des Acrylatkautschukes. Solche funktionellen Monomere sind z.B. Alkylglykoldi (meth) acrylate, (Meth) Acrylsäurevinylester, Triallylcyanurat, Butadien, Isopren, Divinylbenzol, usw.

Die Pfropfkomponente (C) kann auch mehrschalig aufgebaut sein, z.B. aus Polybutadien, Polystyrol- oder Polymethylmethacrylat- Polymer-Kern bestehen, der mit einem Polyacrylsäureester umhüllt ist. Eine bevorzugte Stellung nehmen die Pfropfsubstrate auf Basis von Polybutadien und Polyacrylsäureester ein, wie sie beispielsweise ausführlich in den Schriften DE-OS 30 39 114, 30 39 115, 31 17 052, 32 10 284, EP 0 063 263 und EP 0 064 692 beschrieben sind.

Die Bestandteile (A), (B) und (C) werden getrennt hergestellt und nach herkömmlichen Mischtechniken der Polymerblendherstellung auf Walzen, Kneter, Innenmischer, Schneckenmaschinen durch Schmelzcompoundieren gemischt. Übliche Zusatzstoffe sind Gleitmittel, Stabilisatoren, Flammschutzmittel, Pigmente, verstärkende Füllstoffe, mineralische Füllstoffe, Mattierungsmittel ect. Die Polymerblend-Formmassen dienen zur Herstellung von Formmassen jeglicher Art. Sie zeichnen sich insbesondere durch ein gutes Fließverhalten beim Spritzguß oder bei Extrusion aus, durch die hohe Wärmeformbeständigkeit. Insbesondere zeigen sie kein Aufschiefern oder Delaminieren von Formkörper bei mechanischer Beanspruchung. Die beanspruchten Polymerblends besitzen einen ausgezeichneten hellen Rohton und können ohne Verfärbung bei hohen Temperaturen von 240 bis über 300°C bei kurzen Zykluszeiten unter hoher Maschinenauslastung verarbeitet werden.

In den folgenden Beispielen sind, wenn nicht anders angegeben, Teile Gewichtsteile und Prozente Gewichtsprozente.

Herstellung der Copolymer-Harze (A)

In einem ummantelten Gefäß, das mit Innenthermometer, Rührer, Ein- und Auslaß versehen ist, werden 750 Teile eines Gemisches mit einer Zusammensetzung gemäß Tabelle 1 vorgelegt und auf 130°C erwärmt. Dann wird ein Monomerstrom derselben Zusammensetzung so zudosiert und gleichzeitig dieselbe Menge an Polymerlösung dem Gefäß entnommen, daß der Füllstand im Gefäß gehalten wird. Dem Monomerstrom werden kontinuierlich ca. 0,05 Teile pro Stunde tert. -Butylperpivalat (75 %ig in Dibutylphthalat) zugefügt. Nach ca. 2 h hat sich ein konstanter Umsatz von ca. 40 % eingestellt. Die Polymerlösung wird mit 0,1 Gew.-% 2,6-Di-t-butyl-p-kresol versetzt und anschließend auf einem Ausdampfextruder von Monomeren und flüchtigen Bestandteilen befreit.

(Siehe Tabelle 1 Seite 6 f.)

Tabelle 1 Zusammensetzung der Einsatzmonomeren und der Copolymerisate A.

| | Einsatzmonomere (Gew.-%) | | | | | Copolymerisat (Gew.-%) | | | | |
|---|---|---|---|---|---|---|---|---|---|---|
| A1 | Sty | NPMI | MMA | MA | ACN | Sty | NPMI | MMA | MA | ACN |
| A2 | 57,0 | 6,0 | 37,0 | – | – | 56,2 | 14,3 | 29,5 | – | – |
| A2 | 59,5 | 3,2 | 36,0 | 1,3 | – | 59,8 | 7,0 | 30,2 | 3,0 | – |
| A3 | 95,5 | 4,5 | – | – | – | 89,3 | 10,7 | – | – | – |
| A4 | 59,0 | 4,0 | 35,0 | 2,0 | | 59,8 | 9,7 | 25,7 | 4,8 | – |

Vergleichsbeispiele

| | Sty | NPMI | MMA | MA | ACN | Sty | NPMI | MMA | MA | ACN |
|---|---|---|---|---|---|---|---|---|---|---|
| V1 | 73,0 | – | – | 5,0 | 22,0 | 71,0 | – | – | 12,0 | 17,0 |
| V2 | 70,5 | – | – | 3,5 | 26,0 | 68,8 | – | – | 8,1 | 23,1 |

Sty = Styrol  
MA = Maleinsäureanhydrid  
MMA = Methylmethacrylat  
NPMI = N-Phenyl-maleinimid  
ACN = Acrylnitril

Polycarbonat-Harz B

Das Polycarbonat auf Basis 4,4-Dihydroxydiphenylpropen-2,2 (BPA-Polycarbonat) hatte eine relative Viskosität von 1,28 gemessen in einer Lösung von 0,5 g Polycarbonat in 100 ml Methylenchlorid bei 25°C.

Pfropfmischpolymerisate (C)

$C_1$ Pfropfkautschuk, hergestellt durch Pfropfung von 20 Teilen Methylmethacrylat auf 80 Teile eines in Emulsion polymerisierten Polybutadiens, wobei der mittlere Teilchendurchmesser der Pfropfgrundlage bei ca. 0,4 μm liegt.

$C_2$ Pfropfkautschuk, hergestellt durch Pfropfung von 30 Teilen Methylmethacrylat auf 70 Teile eines in Emulsion polymerisierten vernetzten Butylacrylatkautschuks, wobei der mittlere Teilchendurchmesser der Pfropfgrundlage bei 0,5 μm liegt.

$C_3$ Pfropfkautschuk hergestellt durch Pfropfung von 50 Teilen Styrol und Acrylnitril im Verhältnis 72/28 auf 50 Teile eines in Emulsion polymerisierten Polybutadiens, wobei der mittlere Teilchendurchmesser der Pfropfgrundlage bei ca. 0,4 μm liegt.
(zum Vergleich)

Herstellung der Abmischungen

Die Komponenten wurden entsprechend Tabelle 2 gemischt und bei 230°C auf einem konischen Zweiwellenextruder compoundiert. Die Provekörper wurden bei 250°C gespritzt.

Die erfindungsgemäßen Formmassen der Beispiele 1 bis 5 delaminierten bei mechanischer Beanspruchung nicht. Die gebrochenen Normkleinstäbe zeigen einen Bruch unter Einschnürung des Probekörpers. Die entsprechenden Formkörper der Vergleichsbeispiele zeigten nach Bruch deutliche Delamination und Aufschieferung.

Die Beurteilung der Thermostabilität erfolgt durch Temperaturabspritzung, bei der die Schmelze vor dem Abspritzen 10 Minuten bei 280°C gehalten wurde. Die Formmassen der Vergleichsbeispiele 6 bis 8 weisen eine deutlich stärkere Verfärbung auf als die erfindunsgemäßen Formmassen der Beispiele 1 bis 5.

Zur Beurteilung der Vernetzungsneigung der Formmassen werden die Formmassen auf 280°C aufgewärmt und bei dieser Temperatur gehalten. Nach 5, 10, 15 und 20 min wird dann die Fließfähigkeit nach der MFI-Methode bestimmt.

Die erfindungsgemäßen Formmassen der Beispiele 1 bis 5 zeigen keinen Anstieg der Schmelzviskosität, während die Formmassen der Vergleichsbeispiele 6 bis 8 einen Anstieg der Schmelzviskosität in Tabelle 2 aufweisen. Angegeben ist die Halbwertszeit t 1/2, in der sich die Fließfähigkeit der Schmelze halbiert.

Tabelle 2

| Zusammensetzung | $a_k^{20°C}$ KJ/m² | $a_k^{-40°C}$ KJ/m² | Vicat B °C | $MFI_{260°C}$ g/10 min | Verfärbung 260°C/10 | t 1/2 260°C |
|---|---|---|---|---|---|---|
| 1  35 Tl. A 1 45 Tl. B 20 Tl. C1 | 52 | 25 | 127 | 7.2 | schwach | – |
| 2  25 Tl. A 1 45 Tl. B 20 Tl. C2 | 42 | 23 | 125 | 7.8 | – | – |
| 3  30 Tl. A 2 45 Tl. B 20 Tl. C1 | 53 | 27 | 124 | 8.0 | schwach | – |
| 4  35 Tl. A 3 45 Tl. B 20 Tl. C1 | 45 | 22 | 123 | 8.5 | schwach | – |
| 5  35 Tl. A 4 45 Tl. B 20 Tl. C1 | 49 | 24 | 126 ° | 7.1 | | |
| Vergleichsversuche | | | | | | |
| 6  30 Tl. V1 45 Tl. B 20 Tl. C3 | 35 | 18 | 121 | 4.9 | stark | 20 Min. |
| 7  35 Tl. V2 45 Tl. B 20 Tl. C3 | 30 | 15 | 122 | 5.1 | stark | 24 Min. |
| 8  35 Tl. V1 45 Tl. B 20 Tl. C1 | 30 | 17 | 123 | 4.7 | deutlich | 27 Min. |

a Index  k Kerbschlagzähigkeit nach DIN 53 453
Vic. B  Wärmeformbeständigkeit nach Vicat B in °C nach DIN 53 460
MFI  Melt Flow Index nach DIN 53 735 bei 260°C

## Patentanspruch

Acrylnitrilfreie thermoplastische Formmassen aus
A) 20-78 Gew.-Tln. (bezogen auf Formmasse) eines statistischen Copolymerisats von
$a_1$) 12 bis 92 Gew.-Tln. (bezogen auf Copolymerisat) Styrol, p-Methylstyrol oder Mischungen davon,
$a_2$) 8 bis 30 Gew.-Tle. (bezogen auf Copolymerisat) eines Gemischs aus 100 bis 10 Gew.-% N-Phenyl- oder N-Methyl-maleinimid und 0 bis 90 Gew.-% Maleinsäureanhydrid,
$a_3$) 0 bis 80 Gew.-Tle. (bezogen auf Copolymerisat) Methylmethacrylat,
B) 12-60 Gew.-Tle (bezogen auf Formmasse) eines thermoplastischen Dihydroxydialkanpolycarbonats und
C) 10-40 Gew.-Tle (bezogen auf Formmasse) eines Pfropfpolymerisats von 20 bis 80 Gew.-Tln. Methylmethacrylat auf 80 bis 20 Gew.-Tle. eines Kautschuks mit einer Glasübergangstemperatur unter — 20 °C.

## Claim

Thermoplastic moulding compounds free from acrylonitrile, from
A) 20-78 Parts by weight (based on the moulding compound) of a randomly structured copolymer of
$a_1$) 12 to 92 parts by weight (based on the copolymer of styrene, p-methylstyrene or mixtures thereof,
$a_2$) 8 to 30 parts by weight (based on the copolymer) of a mixture of 100 to 10 % by weight of N-phenyl- or N-methylmaleimide and 0 to 90 % by weight of maleic acid anhydride,
$a_3$) 0 to 80 parts by weight (based on the copolymer) of methylmethacrylate,
B) 12-60 parts by weight (based on the moulding compound) of a thermoplastic dihydroxy dialkane polycarbonate and
C) 10-40 parts by weight (based on the moulding compound) of a graft polymer of 20 to 80 parts by weight of methylmethacrylate on 80 to 20 parts by weight of a rubber having a glass transition temperature below — 20 °C.

## Revendication

Matières à mouler thermoplastiques exemptes d'acrylonitrile, consistant en :
A) 20 à 78 parties en poids (par rapport à la matière à mouler) d'un copolymère statistique de
$a_1$) 12 à 92 parties en poids (par rapport au copolymère) de styrène, de p-méthylstyrène ou de leurs mélanges,
$a_2$) 8 à 30 parties en poids (par rapport au copolymère) d'un mélange de 100 à 10 % en poids de N-phényl- ou de N-méthylmaléimide et de 0 à 90 % en poids d'anhydride maléique,
$a_3$) 0 à 80 parties en poids (par rapport au copolymère) de méthacrylate de méthyle,
B) 12 à 60 parties en poids (rapport à la matière à mouler) d'un polycarbonate thermoplastique de dihydroxydialcane, et
C) 10 à 40 parties en poids (par rapport à la matière à mouler) d'un polymère greffé de 20 à 80 parties en poids de méthacrylate en méthyle sur 80 à 20 parties en poids d'un caoutchouc présentant une température de transition du second ordre inférieure à — 20 °C.